# EUROPEAN PATENT SPECIFICATION

(11) **EP 2 268 133 B1**
(45) Date of publication and mention of the grant of the patent: **12.04.2017**
(21) Application number: 09734318.0
(22) Date of filing: 24.04.2009
(51) Int. Cl.: A01K 61/00

(54) **KIT FOR GROWING SHELLFISH, ASSEMBLY OF PARTS OF SUCH A KIT AND METHOD FOR GROWING SHELLFISH USING SUCH AN ASSEMBLY**
VORRICHTUNG ZUR ZÜCHTUNG VON SCHALENTIEREN, BAUSATZ FÜR EINE SOLCHE VORRICHTUNG UND VERFAHREN ZUR ZÜCHTUNG VON SCHALENTIEREN UNTER VERWENDUNG EINER SOLCHEN VORRICHTUNG
KIT POUR LA CULTURE DE MOLLUSQUES ET CRUSTACÉS, AGENCEMENT DES PIÈCES D'UN TEL KIT ET MÉTHODE POUR LA CULTURE DE MOLLUSQUES ET CRUSTACÉS UTILISANT UN TEL AGENCEMENT

(30) Priority: 25.04.2008 EP 08155229
(43) Date of publication of application: 05.01.2011
(73) Proprietor: Nederlandse Organisatie voor toegepast- natuurwetenschappelijk onderzoek TNO, 2595 DA 's-Gravenhage (NL)
(72) Inventor: OORSCHOT, Ronald Willem Arie, NL-4462 BG Goes (NL); DE VOS, Ronald, NL-4388 LN Oost-Souburg (NL)
(74) Representative: V.O.
(86) International application number: PCT/NL2009/050222
(87) International publication number: WO 2009/131455

(56) References cited:
- FR-A- 2 420 305
- FR-A- 2 484 197
- FR-A- 2 525 862
- US-A- 4 182 270
- A. SÁNCHEZ-MATA AND J. MORA: "A review of marine aquaculture in Spain: production, regulations and environmental monitoring" J. APPL. ICHTHYOL., vol. 16, 2000, pages 209-213, XP002495162 Blackwell Wissenschafts-Verlag, Berlin

## Description

The invention relates to a kit for growing shellfish.

The invention also relates to an assembly of parts of a such kit and a method for growing shellfish using such an assembly.

Such a kit is known from FR-A-2 484 197 in which a bio-degradable collector for mollusks is described, which comprises rings of small dimensions. The rings are made from wood degrading progressively in seawater over a period of 12 to 30 months, and are contained in coarse-mesh nets of material insensitive to the action of seawater.

Further a method for growing shellfish is known which uses a so-called "mussel sock", comprising a tubular shaped sock, serving as a package that is full of mussel spat. The material of the sock is chosen such that after it is exposed to water for a prolonged period of time, a part of the sock will degrade and eventually give way to the mussel. The sock may for example comprise strands of polypropylene and cotton, wherein the latter material degrades in water after a certain period of time, for example one or two days. For growing the mussels these socks are for example attached to, e.g. wrapped around, poles that stand in sea water, which poles may serve as a substrate for further growing of the mussels. For example, tides may provide for the poles with socks to be brought under water. After at least partial degradation of the sock, the mussels escape from the sock while it partially degrades, in order to attach to the pole. The mussels produce byssal threads to attach themselves to the pole, spreading over the surface of the pole, at least over the part of the surface that is under water for a sufficient period of time. For a certain period of time, the mussels feed themselves from the sea until they are sufficiently grown. Then, they are removed from the poles and transported for consumption.

In many cases, not all the mussels are sufficiently grown when they are removed from the poles. Since these mussels are not mature yet, they are not ready for consumption and have to put in a sock again for further growth. Also, the poles in the water occupy relatively a lot of the intertidal area in the sea. Besides, this method is preferably practiced at particular locations, such as coastal sea regions with rather great tidal difference, which locations are not widely available. Still, the mussels that are attached to the poles are subjected to the threat of animals and/of sea animals that eat those mussels, if given the chance, before the mussels are harvested.

It is therefore an object of the invention to provide for an alternative kit for growingshellfish.

This object is achieved by a kit of growing shellfish according to claim 1. With such a kit, an arrangement can be constructed for growing shellfish.

This object is also achieved by an assembly of parts of a kit of growing shellfish according to the invention.

This object is further achieved by a method for growing shellfish using an assembly according to the invention.

The method of growing shellfish provides for a carrier for supporting shellfish. The carrier is integrated with a sheet-like substrate, for example by connecting the carrier to the sheet-like substrate or by changing the carrier in to at least a part of the sheet-like substrate. Multiple carriers may be integrated with the sheet-like substrate. For example multiple carriers may be connected to each other and may change into a sheet-like substrate, or multiple carriers may be connected to the sheet-like substrate by means of receiving means. For shellfish culture, in particular mussel culture, a sheet-like substrate is convenient, amongst others because shellfish, in particular mussels, may adhere to and/or spread along the sheet-like substrate relatively easily. Oysters or cockles can be also supported by the sheet-like substrate over a relatively large surface. Sheet-like substrates can be moved relatively easily, and can be placed at a pre-chosen location, for example pending from a floating arrangement at any chosen water location.

To spread the shellfish over the sheet-like substrate in an efficient manner, it has been found advantageous to use carriers that carry shellfish, e.g. medium sized shellfish. The carriers are arranged to hold many shellfish, e.g. medium sized shellfish, for example such that these may be easily transported in relatively great numbers. The carriers may be integrated with the substrate. Integration may be achieved, for example, by connecting the carriers to the substrate, or by reshaping the carrier, e.g. from a net comprising carriers to a sheet-like substrate. When the carriers are integrated with, e.g. connected to, sheet-like substrate, and put under water, the shellfish may move from the carrier to the sheet-like substrate, to advantageously spread over, and attach to, the sheet-like substrate. The carriers can comprise at least partly degradable, for example tubular shaped, compartments.

In clarification of the invention, embodiments of the invention, and advantages thereof will be further elucidated with reference to the drawing. In the drawing:
figure 1 schematically shows a side view of an arrangement for growing shellfish;
figure 2 schematically shows a front view of an arrangement for growing shellfish;
figure 3 schematically shows a front view of a part of an arrangement for growing shellfish;
figure 4A and 4B schematically show a front view of a part of an arrangement for growing shellfish;
figure 4C schematically shows a front view of a part of an arrangement for growing shellfish, wherein the sheet-like substrate comprises a receiving means;
figure 4D schematically shows a front view of the arrangement of figure 4C, wherein the receiving means has transformed into a part of the sheet-like substrate;
figure 4E schematically shows a front view of a part of an arrangement for growing shellfish, wherein the sheet-like substrate comprises an integrated carrier 4;
figure 4F schematically shows a front view of the arrangement of figure 4E, wherein the carrier has transformed into a part of the sheet-like substrate;
figure 5 schematically shows a front view of a part of an arrangement for growing shellfish.

In this description, identical or corresponding areas have identical or corresponding reference numerals. The exemplary embodiments shown should not be construed to be limitative in any manner and serve merely as illustration. Any dimensions or relative dimensions may not be taken from the drawings.

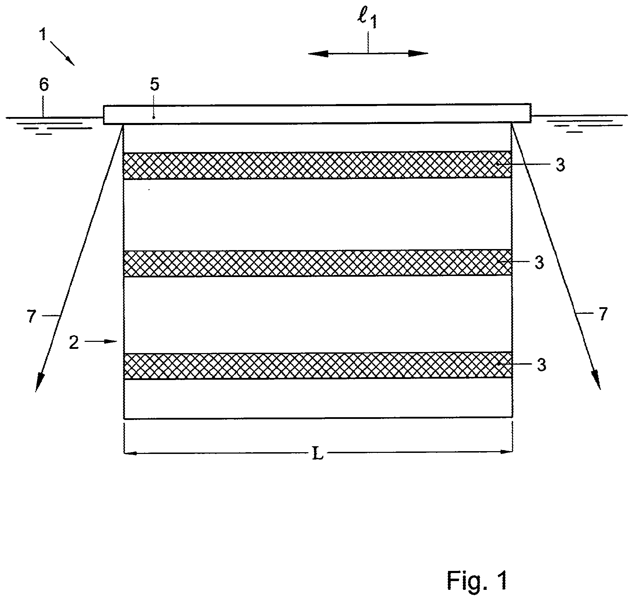

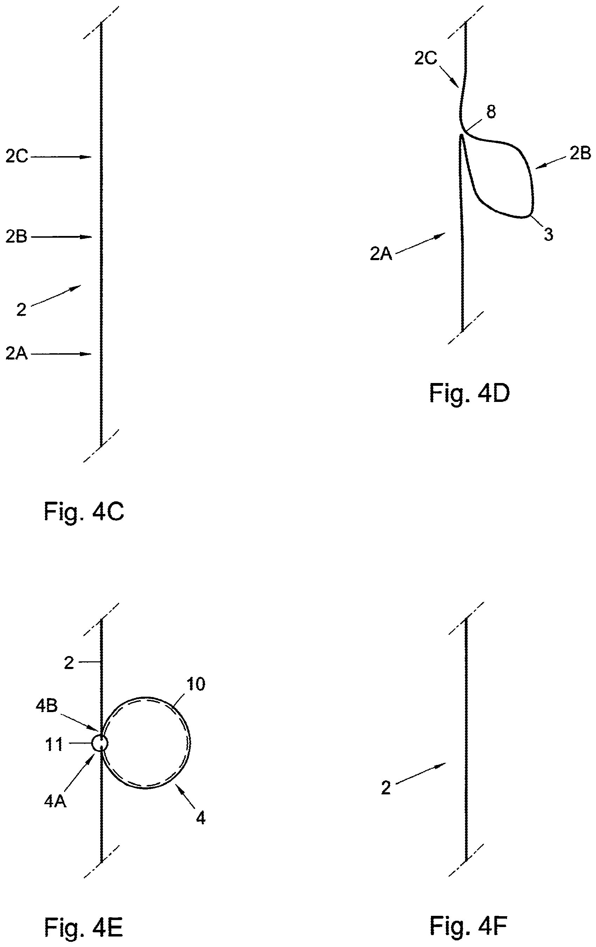

In figure 1, 2, 3, 4A, 4B, 4C, 4D and 5 embodiments of arrangements 1 for growing shellfish, for example mussels, are shown, wherein a sheet-like substrate 2 is provided having receiving means 3, coupling means 8, or a connection element 9 suitable for supporting shellfish carriers 4. The receiving means 3, coupling means 8 and/or connection element 9 connect the shellfish carriers 4 with the sheet-like substrate, such that the carriers 4 can be integrated with the sheet-like substrate 2. In figure 4E another embodiment is shown wherein a carrier 4 is formed by folding the sheet-like substrate 2, so that a carrier 4 is integrated with, more particular part of, the sheet-like substrate 2. When the carrier 4 is placed in water, a coupling means 11 may at least partly degrade so that it lets go, and the carrier 4 transforms into a sheet-like substrate 2 for supporting shellfish (figure 4F).

The arrangement 1 of figure 1 comprises a sheet-like substrate for shellfish in the form of a net-shaped substrate 2, in this description referred to as net 2. In the shown embodiment, the net 2 is provided with substantially tunnel-shaped receiving means 3 for receiving substantially tubular shaped shellfish carriers 4. These shellfish carriers 4 carry substantial amounts of shellfish, for example medium sized shellfish, for example in amounts of thousands or millions of shellfish, for example so that millions of shellfish attach to the sheet-like substrate. The amount of shellfish may depend on the type and size of the shellfish that are grown. The arrangement 1 further comprises a floater 5, which floats on the water surface 6, while supporting the net 2, which is pending under water. The arrangement 1 further comprises an anchor 7, to prevent possible drifting away of the arrangement 1. For example the anchor 7 is fixed to the bottom or another fixed construction. In the position shown the net 2, including the receiving means 3 extend under water.

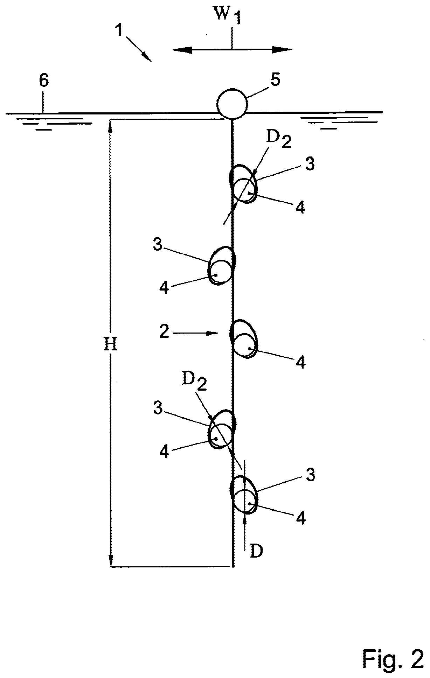

In figure 2 a front view of the shellfish growing arrangement 1 is shown. The receiving means 3 are positioned at one or both sides of the net 2. The shellfish carriers 4 are received within the receiving means 3, such that the shellfish therein extend along the net 2. Advantageously, the net 2 is under the water surface 6. The net 2 shown in figure 1 and 2 may, for example, have a height H of approximately 3 meters, or for example between approximatelyl and 5, or 1 and 10 meter, and a length L of approximately 150 meter, or for example between approximately 5 and 500 meter. The dimensions of the net 2 may vary, and for example depend on local circumstances. The receiving means 3 and/or the carriers 4 may have the same length L. For example multiple carriers 4 can be received in the receiving means 3. For example, in one receiving means 3 multiple carriers 4 could extend next to each other, in width direction w1 (fig. 2), or multiple carriers 4 could extend behind each other, in length direction 11 (fig. 1). The carriers 4 could be substantially shorter than the receiving means 3, and/or multiple receiving means 3 could be provided behind each other, in length direction 11, for example to receive multiple carriers 4 that are substantially shorter than the length L of the net 2.

The net 2 may be flexible, preferably at least flexible enough to be folded and/or somewhat deformed up to a smaller size, e.g. for transport, although the net 2 could also be of a fairly rigid construction. Preferably, the net 2 is at least partly made of netting like material. In other embodiments, other sheet-like substrates may be provided, for example material comprising woven and/or non-woven textile and/or artificial fibres, wires, etc, or flat rigid structures.

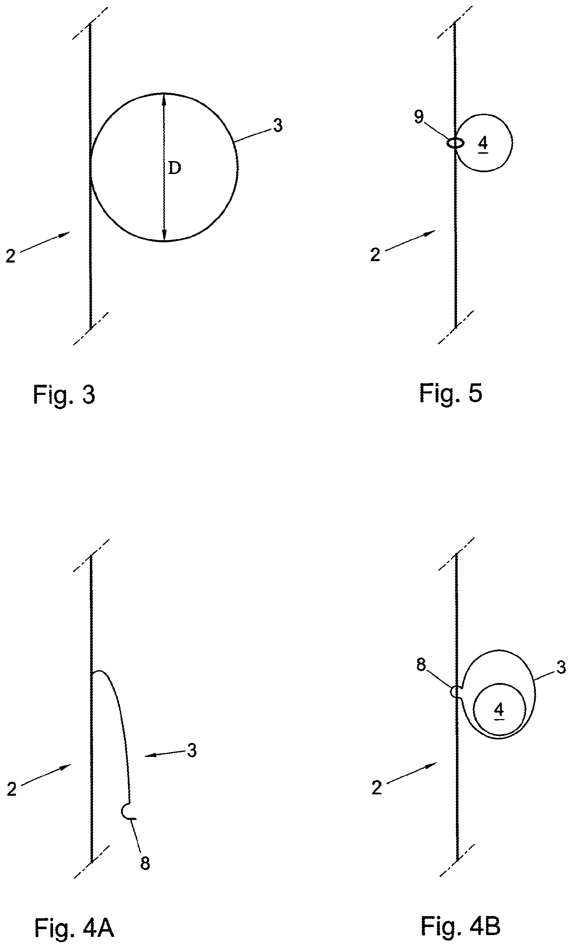

Furthermore, the tunnel-shaped receiving means 3 may for example have a diameter D of between approximately 5 and 100 centimetres, preferably between approximately 15 and 25 centimetres. These tunnel shaped receiving means 3 may for example be made of netting like material, which mesh size is chosen to optimize water exchange between shellfish in carriers 4 and surrounding water. To prevent misunderstandings in case of the receiving means 3 and/or carrier 4 having certain flexibility, the diameter D, D2 should be understood as the largest cross diameter D, D2 thereof, at least when the volume of the receiving means 3 and/or carrier 4 is as large as possible. For example, when the receiving means 3 comprises netting material and is empty, it may take the shape of a flat empty bag, while when it is fully stuffed with carriers 4 and/or mussels, it takes on a cylindrical shape having cross diameter D (see figure 3), and the volume is as large as possible. The length may be the same as the length L of the net 2, or smaller. In an example, the floater 5 may be substantially cylindrical shaped and have a diameter of approximately 25 centimetres.

The carrier 4 may for example be any type of carrier 4. For example the carrier 4 is arranged to be at least partly degradable under water, to give way to the shellfish when being at least partly under water for some time. The carrier 4 may comprise a net-shaped structure, and/or comprise a bag or sock shape, for example. Conveniently, the carrier 4 has a substantially tubular shape, i.e. a longitudinal shape. When the carrier 4 is placed under water, in the receiving means 3, said degradability enables the shellfish to spread and attach themselves to the net 2. Examples of carrier materials or constructions are described in United States patent application publication US2006165925 or Canadian patent application publication CA2489721. The carrier 4 may form a compartment within which shellfish that need to grow further for consumption are kept, wherein escape of the shellfish kept therein is prevented at least until degradation begins. In another embodiment, the carrier 4 for example comprises a degradable strip, to which the shellfish are attached, for example by entanglement or adhering.

The connection between the carrier 4 and the net 2 may be of any type. For example, any type of connection element may be provided for a convenient connection. As explained above, the net 2 may be provided with tubular shaped receiving means 3. In an embodiment the receiving means 3 may be provided with at least partially degradable material. The carrier 4 may for example have a tubular shape fitted around a tubular structure, for example a pipe or the like, or comprise a sheet-like material that is folded around the tubular structure. The carrier material is left in the receiving means 3 during retrieval. In another embodiment, the receiving means 3 could for example comprise a bag or pocket-shaped structure, or any kind of suitable compartment. As a mere example, another kind of receiving means 3 is shown in figures 4A and 4B, wherein a front view of a receiving means 3 is shown, comprising a coupling means 8 such that the receiving means 3 can e.g. be folded around the carrier 4 and connected to the net 2. In another embodiment (fig. 4C, fig. 4D), the receiving means 3 could be made by coupling, e.g. sewing, the netting 2 in a fold-like structure. As can be seen from figures 4C and 4D a first portion 2A of the net 2 passes a second portion 2B of the net 2, and is connected to a third portion 2C of the net 2, the second portion 2B forming the receiving means 3. A coupling means 8, such as sewing thread for example, e.g. for coupling said first and third portions, could comprise degradable material.

In another embodiment, a part of the net 2 is shaped such that it forms at least one carrier 4, in particular a compartment, as shown in figure 4E, 4F. For example, the net 2 may be folded around a tubular structure 10, e.g. a pipe, so that it encloses the tubular structure 10 and the tubular structure 10 serves as a mould (figure 4E). In an embodiment, the tubular structure 10 may carry the shellfish or serve as a means to transport shellfish to the carrier 4. The net 2 may be stitched around the tubular structure 10, e.g. using at least partly degradable material as a coupling means 11, to form a compartment, for example in approximately the same way as the shaping of the receiving means 3 as shown in figures 4C, 4D. The tubular structure 10 is retrieved out of the carrier compartment so that the shellfish are let out of or transported through the tubular structure 10 into the carrier 4. The mussels may for example be pushed out of the tubular structure 10. Coupling of the two ends 4A, 4B of the carrier 4 could for example be achieved by stitching, wherein the coupling means 11 comprises at least partly degradable stitching thread. Preferably, the obtained compartment directly holds the shellfish, so that the net 2 may serve as one or multiple carriers 4, wherein each carrier 4 is integrated with the net 2. The net 2, comprising one ore more carriers 4 with shellfish, may be let down in the water. After some time the coupling means may degrade so that the net 2 changes into a sheet-like shape (figure 4F), wherein preferably the shellfish are attached to the sheet-like net 2. In other words, after the coupling means has degraded, or let go, the net 2 obtains its sheet-like substrate shape and function.

In specific embodiments, the receiving means 3 may for example fully or partially enclose the carrier 4, preferably so that the carrier 4 and/or shellfish are kept from falling. In another embodiment, the carrier 4 is connected to the net 2 via a connection element 9, for example a small connection element 9, which may for example comprise a wire, e.g. for stitching, or clip or the like (fig. 5). In this way, the carrier 4 may be connected to the net 2 more or less directly, wherein the net 2 may for example consist of a sheet-like shape. The connection element 9 may comprise degradable material. The carrier 4 may in principle extend along the net 2 in any direction, for example vertically, diagonally or horizontally, preferably horizontally, and/or may extend along the net 2 having a substantially non-linear shaped, for example substantially extending along a non-linear axis, i.e. comprising a curve or multiple curves and/or an S-shape. A non-linear shaped carrier 4 may for example be advantageous when the carrier 4 is connected to the net 2 via connection elements 9, such as clips and/or wires or the like.

In an alternative embodiment, instead of a floater 5, another carrying structure could be applied. For example a cord, cable or bar could be held between two fixed objects, so that the cord, cable or bar extends near the water surface, wherein the net 2 is connected to said cord, cable or bar and extends at least partly under water. Also, multiple floaters could be applied, and/or a cord, cable or bar could be held by multiple floaters. Also multiple nets 2 could be connected to one floater 5, for example.

In an embodiment, a floater 5, and/or other carrying structure could, in use, extend below the water surface. For example, the net 2 could be anchored to the bottom while the carrying structure exert an upward force to the net 2, e.g. because of buoyant force, e.g. such that the arrangement 1 extends substantially entirely below the water surface, at least during certain periods. For example, because of tides the arrangement 1 may extend entirely under the water surface for a first period, while for a second period a part of the arrangement 1, e.g. the floater 5 and/or other carrying structure, may extend at least partly above water.

In a possible method for growing shellfish according to the invention, first a carrier 4 is provided. Preferably the carrier 4 is arranged to allow the shellfish kept therein or thereby to move away from the carrier 4, onto the net 2, after a certain period of growth. The carrier 4 may be of any type, for example such as described above. The carrier 4 may for example be connected to the net 2 near or above the water level, to facilitate easy connection of the carrier 4 with the net 2. After connection the carrier 4 and the concerning part of the net 2 may be brought under the water surface 6. For example, a mechanism for at least partially lifting the net 2 may be provided.

Then, a period of for example one or two days sets in, wherein the carrier 4 may at least partially degrade. Hence, the shellfish are set free and spread themselves over the net 2, preferably over a large part of the entire surface thereof. The receiving means 3 may form a part of the net 2 and may themselves also form a substrate for the shellfish. The shellfish fix themselves to the net 2, e.g. in case of mussels, using byssal threads, and feed from the water, which may be natural sea water and/or an imitation thereof, for example. It may be advantageous if the net 2 extends more or less vertically, so that the mussels may advantageously filter food from the water streams over a relatively large surface, although more inclined orientations of the net 2, or even approximately horizontal orientations could also be applied in use.

After a certain period, for example after a period of approximately 1 to 8, preferably 3 to 6 months, a large part of the shellfish may be ready for harvesting. In principle any type of harvesting may be suitable wherein the mussels are collected from the net 2. Advantageously, the shellfish can be removed from the net 2 by brushes. For example, a convenient method and arrangement for harvesting is described in European patent application EP1466523.

After said removal of the shellfish, still shellfish may be attached to the sheet-like substrate, for example because of the fact that some shellfish are still relatively less grown and still have relatively strong attachments to the net 2. These shellfish may be left on the net 2. For these shellfish the net 2 may be brought back into the water so that also these shellfish may grow until they are ready for harvesting, so after the carriers 3 have been connected with the net 2, a second harvest may occur. The possibility of a second harvest is for example advantageous for being able to apply a first harvest relatively early, thereby preventing relatively old shellfish from falling from the arrangement 1. Also, younger shellfish may be given the possibility of further growth, so that a relatively high amount of applied shellfish is eventually indeed collected for consumption later on.

An embodiment of the arrangement 1 is suitable to be used for multiple times, i.e. for growing and harvesting multiple batches of shellfish one after another, each batch containing multiple carriers 4.

In an embodiment the shellfish may be mussels. Certain shellfish, unlike mussels, are not provided with byssal threads or other suitable attachment means for attachment to the net 2. These shellfish may not suitable to attach themselves the net 2, but may be attached to, and/or supported by the net 2 in another manner. Such shellfish may for example include oysters or cockles. In case of the culture of cockles, partly degradable material can be used for shellfish carriers 4. Mesh size of the degradable part is small enough to keep small and/or medium-sized cockles within the carrier 4 as long as the material has not degraded. The mesh size of a non-degradable part of the shellfish carriers 4 may be arranged so that the grown cockles are kept in the carriers 4, and hence in the receiving means 3. After degradation of the degradable part the grown cockles are left in the carriers 4. The cockles will inhale the filtering water through their inhalant siphon. After the cockles ready for harvesting, the carriers 4 will be taken out of the receiving means 3.

In case of culture of oysters, shellfish carriers 4 could be prepared of partly degradable material to keep the medium-sized oysters. Mesh size is chose to keep oysters that have grown to a certain size within the shellfish carriers 4. Harvesting of these species may be done by removal of the shellfish carriers 4 from the receiving means 3.

In an embodiment the features of the arrangement 1 are provided in a kit for growing shellfish, for example so that the arrangement 1 can be constructed on any chosen location. For example, the kit comprises a sheet-like substrate, for example said net 2, one or more carriers 4, and/or connection elements for connecting the carriers 4 with the net 2 may be provided.

For clarification and to prevent misinterpretation, in the above description reference is made to certain shapes, in particular to geometry related aspects, such as for example 'tubular shaped', 'axis', or the like, as well as to certain dimensions. It should however be noted that the materials and constructions used in the arrangement 1 are oftentimes at least partly flexible, for example comprise partly flexible nets or the like, such that deformation of the structure will likely occur. Therefore, in practise it may be difficult to determine the geometry related aspects and/or dimensions up to a very accurate level. Rather, the geometry related aspects and/or dimensions are to be understood as presenting an approximate, general indication of the respective shape. The skilled person will however recognise the geometry related aspects and/or dimensions referred to in this description.

Optionally, the shellfish growing arrangement 1 could be used at any chosen location, for example, far into the sea, e.g. hundreds of meters or kilometres from the coast line, and/or at an artificial basin/container/lake using natural sea water, and/or within enclosed sea water areas, such as dikes for example. Additional food could be provided at that location. A location for example could be chosen such that the risk of predators, e.g. birds, crabs, starfish or the like, damaging or eating the shellfish can be lowered.

The skilled person will recognise, from the above description that the receiving means 3, coupling means 8 and/or connection element 9 all provide for integrating elements for integrating, for example connecting, the carrier 4 with the sheet-like substrate 2.

It shall be obvious that the invention is not limited in any way to the embodiments that are represented in the description and the drawings. Many variations and combinations are possible within the framework of the invention as outlined by the claims. Combinations of one or more aspects of the embodiments or combinations of different embodiments are possible within the framework of the invention. All comparable variations are understood to fall within the framework of the invention as outlined by the claims.

## Claims

1. Kit for growing shellfish, comprising:
a sheet-like substrate (2) for supporting the shellfish while they grow, and
a carrier (4) for carrying shellfish, arranged to be integrated with the sheet-like substrate (2) so that after integration of the carrier (4) with the substrate (2) the shellfish are supported by said substrate (2),
wherein connection elements (8, 9, 11) are provided to connect the carrier (4) to the sheet-like substrate (2), **characterized in that**, the sheet-like substrate (2) is provided with the connection element (9), **in that** the connection element (9) comprises a receiving means (3) for receiving the carrier (4), and **in that** the receiving means (3) comprises a compartment, preferably a tunnel-shaped structure.

2. Assembly of parts of a kit according to claim 1, comprising an arrangement (1) for growing shellfish constructed from said kit.

3. Method for growing shellfish, in which method an assembly according to claim 2 is used, wherein the carrier (4) supports multiple shellfish and is integrated with the sheet-like substrate (2), wherein the shellfish are supported by at least a part of the sheet-like substrate (2), wherein the shellfish attach themselves to the sheet-like substrate (2).

## Patentansprüche

1. Vorrichtung zur Züchtung von Schalentieren, umfassend:
ein blattähnliches Substrat (2) zum Stützen der Schalentiere, während sie wachsen, und
einen Träger (4) zum Tragen von Schalentieren, angeordnet, um mit dem blattähnlichen Substrat (2) integriert zu werden, sodass nach der Integration des Trägers (4) mit dem Substrat (2) die Schalentiere von dem Substrat (2) gestützt werden, wobei Verbindungselemente (8, 9, 11) bereitgestellt sind, um den Träger (4) mit dem blattähnlichen Substrat (2) zu verbinden, **dadurch gekennzeichnet, dass** das blattähnliche Substrat (2) mit dem Verbindungselement (9) versehen ist, dass das Verbindungselement (9) ein Aufnahmemittel (3) zum Aufnehmen des Trägers (4) umfasst und dass das Aufnahmemittel (3) ein Abteil umfasst, bevorzugt eine tunnelförmige Struktur.

2. Bausatz für eine Vorrichtung nach Anspruch 1, umfassend eine Anordnung (1), gebaut aus der Vorrichtung zur Züchtung von Schalentieren.

3. Verfahren zur Züchtung von Schalentieren, in welchem Verfahren ein Bausatz nach Anspruch 2 verwendet wird, wobei der Träger (4) mehrere Schalentiere stützt und mit dem blattähnlichen Substrat (2) integriert ist, wobei die Schalentiere von mindestens einem Teil des blattähnlichen Substrats (2) gestützt werden, wobei die Schalentiere sich an dem blattähnlichen Substrat (2) anheften.

## Revendications

1. Kit de croissance de fruits de mer, comprenant :
un substrat analogue à une feuille (2) pour supporter les fruits de mer pendant leur croissance, et
un support (4) pour supporter les fruits de mer, agencé pour être intégré au substrat analogue à une feuille (2) de sorte qu'après intégration du support (4) avec le substrat (2) les fruits de mer sont supportés par ledit substrat (2),
dans lequel des éléments de liaison (8, 9, 11) sont agencés pour relier le support (4) au substrat analogue à une feuille (2), **caractérisé en ce que**, le substrat analogue à une feuille (2) est muni de l'élément de liaison (9), **en ce que** l'élément de liaison (9) comprend des moyens de réception (3) pour recevoir le support (4), et **en ce que** les moyens de réception (3) comprennent un compartiment, de préférence une structure en forme de tunnel.

2. Ensemble de parties d'un kit selon la revendication 1, comprenant un agencement (1) pour faire croître des fruits de mer, construit à partir dudit kit.

3. Méthode de croissance de fruits de mer, méthode dans laquelle un ensemble selon la revendication 2 est utilisé, dans lequel le support (4) supporte de multiples fruits de mer et est intégré au substrat analogue à une feuille (2), dans laquelle les fruits de mer sont supportés par au moins une partie du substrat analogue à une feuille (2), les fruits de mer se fixant d'eux-mêmes sur le substrat analogue à une feuille (2).
